# EUROPÄISCHE PATENTANMELDUNG

(11) **EP 4 191 820 A1**
(43) Veröffentlichungstag der Anmeldung: **07.06.2023**
(21) Anmeldenummer: 22204188.1
(22) Anmeldetag: 27.10.2022
(51) Int. Cl.: H02J 7/00, B25F 5/00

(54) **AUTOMATISCHE PROJEKTABHÄNGIGE PARAMETRIERUNG EINES ELEKTROGERÄTS**

(30) Priorität: 02.12.2021 DE 102021131793
(71) Anmelder: Einhell Germany AG, 94405 Landau / Isar (DE)
(72) Erfinder: THANNHUBER, Markus, 94405 Landau (DE)
(74) Vertreter: Hofstetter, Schurack & Partner

(57) **Zusammenfassung**

Gemäß einem Verfahren zur automatischen Einstellung eines Geräteparameters eines Elektrogeräts (1) abhängig von gespeicherten Projektdaten, welche einer Vielzahl vorgegebener Projektschritte jeweils einen Wert für den Geräteparameter zuordnen, wird mittels wenigstens einer Steuereinheit (4) des Elektrogeräts (1) ein aktueller Projektschritt der Vielzahl Projektschritte bestimmt und der dem aktuellen Projektschritt zugeordnete Wert für den Geräteparameter wird basierend auf den Projektdaten bestimmt wird und automatisch eingestellt.

## Beschreibung

Die vorliegende Erfindung betrifft ein Verfahren zur automatischen Einstellung eines Geräteparameters eines Elektrogeräts sowie ein entsprechendes Elektrogerät.

Bei der Durchführung von Projekten unter Verwendung von Elektrogeräten, insbesondere Elektrowerkzeugen, beispielsweise im Heimwerkerbereich, können die Werte eines oder mehrerer Geräteparameter des Elektrogeräts abhängig vom aktuellen Status innerhalb eines durchzuführenden Projekts einzustellen sein oder optimal eingestellt werden.

Es ist eine Aufgabe der vorliegenden Erfindung, zur Unterstützung eines Benutzers bei der Durchführung eines Projekts unter Verwendung eines Elektrogeräts eine Möglichkeit zur automatischen Einstellung eines Geräteparameters des Elektrogeräts anzugeben.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, Projektdaten zu speichern, die jedem Projektschritt einer Vielzahl aufeinanderfolgender Projektschritte jeweils einen Wert für den Geräteparameter zuordnen. Abhängig von einem aktuellen Projektschritt wird der entsprechend zugeordnete Wert bestimmt und automatisch eingestellt.

Gemäß einem Aspekt der Erfindung wird ein Verfahren zur automatischen Einstellung eines Geräteparameters eines Elektrogeräts, insbesondere eines Elektrowerkzeugs, abhängig von gespeicherten Projektdaten angegeben. Die Projektdaten ordnen einer Vielzahl vorgegebener aufeinanderfolgender Projektschritte jeweils einen Wert für den Geräteparameter zu. Mittels wenigstens einer Steuereinheit des Elektrogeräts wird ein aktueller Projektschritt der Vielzahl aufeinanderfolgender Projektschritte bestimmt. Mittels der wenigstens einen Steuereinheit wird der dem aktuellen Projektschritt zugeordnete Wert für den Geräteparameter basierend auf den Projektdaten bestimmt, insbesondere durch Auslesen der gespeicherten Projektdaten, und automatisch eingestellt.

Das Elektrogerät kann beispielsweise ein akkubetriebenes Elektrogerät sein, das ein Akkupack zur Energieversorgung des Elektrogeräts aufweist.

Das Akkupack ist mit einem Gehäuse des Elektrogeräts mechanisch und elektrisch verbindbar. Beispielsweise kann das Akkupack, insbesondere zerstörungsfrei lösbar, mit dem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen. Das Akkupack kann jedoch als Teil des Elektrogeräts aufgefasst werden. Insbesondere kann das Akkupack die wenigstens eine Steuereinheit teilweise oder vollständig beinhalten.

Zur Energieversorgung des Elektrogeräts weist das Akkupack wenigstens eine Akkumulatorzelle auf, vorzugsweise mehrere in Reihe und/oder parallel verschaltete Akkumulatorzellen. Eine elektrische Verbindung der wenigstens einen Akkumulatorzelle mit einem Verbraucher des Elektrogeräts, beispielsweise einem Motor des Elektrogeräts, kann über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Die Projektschritte spezifizieren ein Projekt oder einen Teil des Projekts, wobei wenigstens ein Teil der Projektschritte unter Verwendung des mit dem Akkupack betreibbaren Elektrogeräts durchgeführt werden kann. Ein Projektschritt kann dabei eine oder mehrere Tätigkeiten, die durch den Benutzer durchzuführen sind, umfassen. Insbesondere kann der aktuelle Projektschritt unter Verwendung des Elektrogeräts durchgeführt werden. Es ist aber nicht notwendigerweise erforderlich, dass das Elektrogerät in allen Projektschritten verwendet wird oder verwendet werden kann. In verschiedenen Projektschritten können auch verschiedene Elektrogeräte einsetzbar sein, wobei das Akkupack gegebenenfalls auch zum Betrieb mehrerer verschiedener Elektrogeräte ausgelegt sein kann.

Möglicherweise können in dem Projekt auch in mehrere Elektrogeräte und/oder mehrere Akkupacks eingesetzt werden, wobei die Elektrogeräte und/oder mehrere Akkupacks untereinander synchronisiert werden können.

Dementsprechend können die Projektdaten Informationen zu allen Projektschritten einer Sequenz aufeinanderfolgender Projektschritte enthalten, wobei die Sequenz die Vielzahl von Projektschritten enthält oder aus dieser besteht. Zumindest für diejenigen Projektschritte der Sequenz, die Teil der Vielzahl von Projektschritten sind, enthalten die Projektdaten die entsprechende Zuordnung der Werte für den Geräteparameter.

Die aufeinanderfolgenden Projektschritte der Sequenz weisen beispielsweise eine definierte Reihenfolge auf, die anhand der Projektdaten bestimmbar ist. Die Reihenfolge ist beispielsweise erforderlich oder vorteilhaft, um das gewünschte Projekt durchführen zu können. Folglich ist auch für die Projektschritte der Vielzahl von Projektschritten eine Reihenfolge definiert und anhand der Projektdaten bestimmbar, auch wenn die Projektschritte der Vielzahl von Projektschritten gemäß der Reihenfolge nicht notwendigerweise aufeinanderfolgen.

Insbesondere kann das Projekt auch Projektschritte enthalten, die nicht notwendigerweise gemäß einer vorgegebenen sequenziellen Abfolge abgearbeitet werden müssen. Beispielsweise könnten mehrere Schrauben derart appliziert werden, dass zunächst mehrere Löcher gebohrt werden und danach erst die Schrauben gesetzt werden oder es könnte jeweils ein Loch gebohrt werden, die zugehörige Schraube gesetzt werden, das nächste Loch gebohrt werden und so weiter.

Der aktuelle Projektschritt kann insbesondere anhand eines aktuellen Projektstatus bestimmt werden. Dieser entspricht der Information, welche Projektschritte der Sequenz bereits vergangen oder erledigt sind, beziehungsweise welche noch bevorstehen oder beziehungsweise welcher gerade durchgeführt wird. Diese Information kann die wenigstens eine Steuereinheit beispielsweise basierend auf einem vorgegebenen Zeitplan, basierend auf einer Benutzereingabe oder auf Messungen von Betriebsparametern des Elektrogeräts bestimmen. Alternativ kann die wenigstens eine Steuereinheit den Projektstatus von einer externen Recheneinheit erhalten.

Die Projektdaten können auf einem Datenspeicher des Elektrogeräts, beispielsweise des Akkupacks oder der wenigstens einen Steuereinheit, gespeichert sein. Beispielsweise können die Projektdaten auf einem externen Datenträger bereitgestellt und auf den Datenspeicher des Elektrogeräts übertragen werden. Alternativ können die Projektdaten beispielsweise auch von einem externen elektronischen Gerät, beispielsweise einem Servercomputer oder einem mobilen elektronischen Endgerät über eine drahtlose Kommunikationsvorrichtung auf das Elektrogerät und insbesondere den Datenspeicher des Elektrogeräts übertragen werden.

Alternativ können die Projektdaten auf einem externen Datenspeicher gespeichert sein, beispielsweise auf einem Datenspeicher einer externen Recheneinheit, insbesondere auf einem Datenspeicher des externen elektronischen Geräts. Die wenigstens eine Steuereinheit kann dann, beispielsweise mittels drahtloser Kommunikation, den dem aktuellen Projektschritt zugeordneten Wert für den Geräteparameter von dem externen Datenspeicher erhalten.

Die wenigstens eine Steuereinheit kann vollständig Teil des Akkupacks sein oder als Teil des Elektrogeräts, jedoch vollständig außerhalb des Akkupacks, insbesondere in dem Gehäuse des Elektrogeräts, vorgesehen sein. In diesen Fällen kann die wenigstens eine Steuereinheit aus genau einer oder aus mehreren Steuereinheiten bestehen.

In alternativen Ausführungsformen beinhaltet die wenigstens eine Steuereinheit zwei oder mehr Steuereinheiten, wobei eine erste Steuereinheit der zwei oder mehr Steuereinheiten Teil des Akkupacks ist und eine zweite Steuereinheit der zwei oder mehr Steuereinheiten Teil des Elektrogeräts, aber nicht Teil des Akkupacks ist. Die erste und die zweite Steuereinheit können dann unterschiedliche Verfahrensschritte des erfindungsgemäßen Verfahrens durchführen, die bezüglich der wenigstens einen Steuereinheit hier und im Folgenden erläutert werden. Dabei können die erste und die zweite Steuereinheit in einer Kommunikationsverbindung miteinander stehen, insbesondere wenn das Akkupack mit dem Gehäuse des Elektrogeräts verbunden ist. Die Kommunikationsverbindung kann dabei drahtlos oder drahtgebunden ausgestaltet sein. Beispielsweise kann die Kommunikationsverbindung gemäß spezifizierten Regeln zum seriellen Datenaustausch ausgestaltet sein, beispielsweise gemäß UART (Englisch: "Universal Asynchronous Receiver / Transmitter") oder gemäß I2C (Englisch: "Inter-Integrated Circuit"). Besonders die Ausgestaltung gemäß UART ist aufgrund der geringen Komplexität und aufgrund dessen, dass zum Datenaustausch lediglich zwei Kommunikationsleitungen erforderlich sind, besonders vorteilhaft.

Das automatische Einstellen des Werts für den Geräteparameter mittels der wenigstens einen Steuereinheit kann direkt oder indirekt erfolgen. Bei einer direkten Einstellung kann die wenigstens eine Steuereinheit beispielsweise einen Betriebsparameter, wie etwa einen Betriebsstrom, eine Betriebsspannung oder eine Leistungsabgabe an einen elektrischen oder elektronischen Verbraucher, beispielsweise einen Elektromotor, des Elektrogeräts, gemäß dem Wert für den Geräteparameter festlegen. Bei einer indirekten Einstellung kann die wenigstens eine Steuereinheit eine oder mehrere weitere Komponenten des Elektrogeräts mittels entsprechender Steuerbefehle ansteuern, um den Wert des Geräteparameters automatisch einzustellen. Beispielsweise kann die wenigstens eine Steuereinheit einen oder mehrere Stellglieder, Stellmotoren, Linearaktuatoren oder sonstige Aktuatoren ansteuern, um eine mechanische Einstellung des Elektrogeräts gemäß dem Wert des Geräteparameters einzustellen.

Durch ein erfindungsgemäßes Verfahren wird also die Einstellung des Geräteparameters abhängig von dem aktuellen Projektstatus, repräsentiert durch den aktuellen Projektschritt, automatisiert möglich. Dadurch können zum einen Fehler bei der Einstellung des Geräteparameters durch einen Benutzer verhindert werden oder es kann verhindert werden, dass das Einstellen beziehungsweise Ändern des Geräteparameters zwischen verschiedenen Projektschritten versehentlich nicht durchgeführt wird. Dies führt zu einer reduzierten Fehlerwahrscheinlichkeit bei der Durchführung des Projekts. Außerdem kann durch die vorgegebene Zuordnung der Werte des Geräteparameters zu den einzelnen Projektschritten sichergestellt werden, dass die Einstellung des Geräteparameters stets auf den optimalen oder auf einen vorteilhaften Wert erfolgt. Dadurch kann die Qualität bei der Durchführung des Projekts erhöht sowie gegebenenfalls die Lebensdauer des Elektrogeräts verlängert werden.

Gemäß zumindest einer Ausführungsform des erfindungsgemäßen Verfahrens zur automatischen Einstellung eines Geräteparameters eines Elektrogeräts entspricht der Geräteparameter einem elektrischen oder elektronischen Betriebsparameter zum Betrieb des elektrischen oder elektronischen Verbrauchers, beispielsweise des Elektromotors, des Elektrogeräts.

Der Betriebsparameter kann beispielsweise einer elektrischen Leistungsabgabe von einer Energiequelle des Elektrogeräts, insbesondere des Akkupacks, an den Verbraucher, einem Betriebsstrom, einer Betriebsspannung, einer Motordrehrichtung des Elektromotors, einer Motordrehzahl des Elektromotors, einem Parameter eines Motordrehzahlprofils des Elektromotors, einem Motordrehmoment oder einem Parameter eines Motordrehmomentprofils des Elektromotors entsprechen.

Das Motordrehmomentprofil und/oder das Motordrehzahlprofil kann beim Beispiel eines Schraubers oder einer Bohrmaschine als Elektrogerät beispielsweise derart auf die durchzuführende Aktion abgestimmt sein, dass zu Beginn des Schraub- oder Bohrvorgangs ein höheres Drehmoment und/oder eine höhere Drehzahl eingestellt wird und das Drehmoment und/oder die Drehzahl zum Ende des Schraub- oder Bohrvorgangs verringert wird, um zu verhindern, dass die Bohrung zu tief ausgeführt wird oder eine Schraube zu tief versenkt oder zu fest angezogen wird. Aber auch andere dynamische Profile sind je nach Anwendungsfall möglich.

Den Betriebsparameter kann die wenigstens eine Steuereinheit insbesondere direkt einstellen. Beispielsweise kann die wenigstens eine Steuereinheit ein Batteriemanagementsystem für das Akkupack oder des Akkupacks beinhalten, welches den Betriebsparameter entsprechend einstellen kann.

Auf diese Weise kann das Elektrogerät zum Durchführen des aktuellen Projektschritts automatisch optimal eingestellt werden.

Gemäß zumindest einer Ausführungsform entspricht der Geräteparameter einer räumlichen Ausrichtung oder Position einer Komponente des Elektrogeräts, insbesondere in einem vorgegebenen Koordinatensystem oder bezüglich einem vorgegebenen Punkt und/oder einer vorgegebenen Richtung.

Der Geräteparameter kann beispielsweise einer räumlichen Ausrichtung oder Position des gesamten Elektrogeräts im umgebenden Raum oder einer Position oder Ausrichtung einer einzelnen Komponente bezüglich einer anderen Komponente des Elektrogeräts entsprechen.

Im Falle eines Elektrowerkzeugs als Elektrogerät, beispielsweise einer elektrischen Säge, einer elektrischen Bohrmaschine, eines elektrischen Schraubers, et cetera, kann der Geräteparameter auch der Position eines Anschlags des Elektrogeräts entsprechen oder einem Winkel eines Sägeblatts, beispielsweise einem Kappwinkel oder einem Gehrungswinkel, et cetera.

Zum Einstellen der Ausrichtung oder Position der Komponente kann die wenigstens eine Steuereinheit wie oben erwähnt beispielsweise einen oder mehrere Aktuatoren des Elektrogeräts ansteuern.

Auf diese Weise kann insbesondere zuverlässig verhindert werden, dass der Benutzer bei der Durchführung des aktuellen Projektschritts eine fehlerhafte Bearbeitung eines Werkstücks vornimmt.

Gemäß zumindest einer Ausführungsform speichert ein Datenspeicher des Elektrogeräts die Projektdaten. Mittels der wenigstens einen Steuereinheit wird der Datenspeicher gelesen, um den dem aktuellen Projektschritt zugeordneten Wert für den Geräteparameter zu bestimmen.

Solche Ausführungsformen haben den Vorteil, dass das Elektrogerät nicht notwendigerweise in einer drahtlosen Kommunikationsverbindung mit einem Servercomputer oder einer sonstigen externen Recheneinheit stehen muss, um die Einstellung des Geräteparameters automatisch durchzuführen.

Gemäß zumindest einer Ausführungsform speichert die externe Recheneinheit die Projektdaten und der dem aktuellen Projektschritt zugeordnete Wert für den Geräteparameter wird von der wenigstens einen Steuereinheit mittels drahtloser Kommunikation von der externen Recheneinheit erhalten.

Es ist in solchen Ausführungsformen also insbesondere nicht notwendig, dass das Elektrogerät die Projektdaten speichert oder zwischenspeichert. Dies hat den Vorteil, dass die Projektdaten gegebenenfalls zentral für eine Vielzahl von Elektrogeräten verwaltet, aktualisiert, erweitert und/oder angepasst werden kann, ohne dass dies eine physische Interaktion mit dem Elektrogerät erfordert. Ferner kann auch eine Vielzahl von Projekten zentral verwaltet, aktualisiert oder ergänzt werden.

Gemäß zumindest einer Ausführungsform wird eine Benutzereingabe erfasst und der aktuelle Projektschritt wird mittels der wenigstens einen Steuereinheit zumindest teilweise abhängig von der Benutzereingabe bestimmt.

Die Benutzereingabe kann dabei insbesondere durch ein Eingabeelement des Elektrogeräts, das mit der wenigstens einen Steuereinheit verbunden ist, erfasst werden. Alternativ oder zusätzlich kann die Benutzereingabe auch an einem externen elektronischen Gerät, beispielsweise einem externen elektronischen mobilen Endgerät, wie etwa einem Smartphone oder Tablet-Computer, oder über eine Cloud erfolgen und die wenigstens eine Steuereinheit erhält eine Information über die Benutzereingabe über die Kommunikationsverbindung mit dem externen elektronischen Gerät.

Auf diese Weise kann der Benutzer der wenigstens einen Steuereinheit also über die Benutzereingabe die Informationen zur Verfügung stellen, was der aktuelle Projektschritt ist oder dass der vorherige Projektschritt nun abgeschlossen ist.

Insbesondere kann zum Erfassen der Benutzereingabe eine Benutzerinteraktion des Benutzers mit dem Eingabegerät des Elektrogeräts detektiert werden. Gegebenenfalls kann die wenigstens eine Steuereinheit die Benutzereingabe basierend auf der erfassten Benutzerinteraktion erkennen.

Die Benutzerinteraktion kann beispielsweise als Einwirkung des Benutzers auf das Eingabegerät verstanden werden. Dabei kann das Eingabegerät beispielsweise einen mechanischen Schalter oder Taster, ein berührungsempfindliches Eingabeelement und/oder ein Mikrofon zum Erfassen der Benutzerinteraktion aufweisen.

Im Falle eines Schalters oder Tasters wirkt der Benutzer auf das Eingabegerät ein, indem er den Schalter oder Taster drückt oder betätigt. Im Falle eines berührungsempfindlichen Eingabeelements, beispielsweise eines Touchdisplays oder eines sonstigen Bereichs zur Berührungserkennung wirkt der Benutzer auf das Eingabegerät ein, indem er dieses berührt. Im Falle eines Mikrofons kann der Benutzer auf das Eingabegerät einwirken, indem er selbst einen Sprachbefehl oder eine Spracheingabe an das Mikrofon abgibt.

Die Verwendung eines Mikrofons zum Erfassen der Benutzerinteraktion ist besonders vorteilhaft, da der Benutzer dann gegebenenfalls von seiner aktuellen Tätigkeit oder Körperhaltung nicht abweichen muss, um die Benutzereingabe zu tätigen. Der Benutzer kann also beispielsweise vordefinierte Sprachbefehle, wie beispielsweise "weiter" oder "nächster Schritt" formulieren, um die Steuereinheit zu informieren.

Ferner kann der Benutzer die wenigstens eine Steuereinheit durch die Einwirkung auf das Eingabegerät dazu veranlassen, dass der aktuelle Projektschritt auf einen vorherigen, also insbesondere scheinbar bereits abgeschlossenen, Projektschritt gesetzt wird, und so weiter. Hierzu können verschiedene Eingabegeräte oder verschiedene Sprachbefehle für unterschiedliche Zwecke vorgesehen sein.

Insbesondere ist also auch ein Rücksprung in einen vorherigen Projektschritt möglich, beispielsweise ausgelöst durch einen Sprachbefehl "zurück" oder dergleichen des Benutzers. Auch ein Wiederholen des jeweiligen Projektschritts ist denkbar.

In manchen Ausführungsformen kann die wenigstens eine Steuereinheit den Benutzer über einen Lautsprecher des Elektrogeräts, gegebenenfalls unter Verwendung eines Sprachsyntheseschaltkreises der wenigstens einen Steuereinheit und/oder basierend auf gespeicherten Audiodateien, durch eine sprachliche Aufforderung zu der Benutzereingabe aufordern.

Beispielsweise kann das Elektrogerät, insbesondere das Akkupack, eine Kommunikationsschnittstelle zur drahtlosen Kommunikation mit der externen Recheneinheit aufweisen. Die Kommunikationsschnittstelle kann insbesondere zur drahtlosen Kommunikation über ein Funknetzwerk eingerichtet sein, beispielsweise über ein Mobilfunknetz oder ein Niedrigenergieweitverkehrnetz, LPWAN (englisch: "Low Power Wide Area Network"), insbesondere ein NB-IoT-Netzwerk (englisch: "Narrow-Band Internet of Things"). Das Funknetz kann insbesondere gemäß GSM, UMTS, LTE, 5G, 6G et cetera oder NB-IoT ausgestaltet sein. Ferner sind auch nichtzellbasierte Ansätze wie etwa LoRa oder ZigBee möglich.

Gemäß zumindest einer Ausführungsform erhält die wenigstens eine Steuereinheit, insbesondere über die Kommunikationsschnittstelle, ein Eingabesignal von der externen Recheneinheit und detektiert die Benutzereingabe basierend auf dem Eingabesignal.

Die Benutzereingabe kann daher an der externen Recheneinheit vorgenommen werden, beispielsweise an einem mobilen elektronischen Endgerät wie etwa einem Smartphone, einem Laptopcomputer oder einem Tabletcomputer. Hierzu kann beispielsweise eine entsprechende Applikation auf der externen Recheneinheit zum Erfassen der Benutzereingabe implementiert werden oder die Eingabe kann über einen Browser oder einen entsprechenden Webserver an die Steuereinheit übermittelt werden.

Somit kann die Benutzereingabe auch getätigt werden und der aktuelle Projektschritt dementsprechend auch abhängig von der Benutzereingabe bestimmt werden, wenn sich das Elektrogerät gerade nicht in Reichweite des Benutzers befindet, sodass er eine mechanische Taste an dem Akkupack nicht ohne einen Standortwechsel betätigen könnte beziehungsweise eine Spracheingabe über das Mikrofon nicht ohne Standortwechsel durchführen kann.

Gemäß zumindest einer Ausführungsform erhält die wenigstens eine Steuereinheit mittels drahtloser Kommunikation eine Statusinformation, insbesondere von der externen Recheneinheit und bestimmt den aktuellen Projektschritt zumindest teilweise abhängig von der Statusinformation.

Dementsprechend kann die externe Recheneinheit basierend auf einer Benutzereingabe oder sonstigen Informationen selbst die Statusinformation erzeugen und dem Elektrogerät wie beschrieben bereitstellen.

Gemäß zumindest einer Ausführungsform wird mittels der wenigstens einen Steuereinheit ein Betriebsstrom zum Betrieb eines Verbrauchers, insbesondere des Elektromotors, des Elektrogeräts und/oder eine Betriebsspannung zum Betrieb des Verbrauchers und/oder eine Leistungsabgabe einer Energiequelle an den Verbraucher überwacht und der aktuelle Projektschritt wird zumindest teilweise abhängig von einem Ergebnis der Überwachung bestimmt.

Beispielsweise kann die wenigstens eine Steuereinheit den Betriebsstrom und/oder die Betriebsspannung und/oder die Leitungsabgabe steuern oder regeln, um dem Elektrogerät beziehungsweise dem Verbraucher elektrische Leistung bereitzustellen.

Durch die Überwachung des Betriebsstroms und/oder der Betriebsspannung und eine entsprechende Rückkopplung in dem zeitlichen Verlauf des Betriebsstroms und/oder der Betriebsspannung von dem Elektrogerät oder dem Elektromotor, die sich beispielsweise in Form sogenannter Ripples ausdrückt, kann die wenigstens eine Steuereinheit Informationen über einen Verlauf der Motorbewegung, beispielsweise einer Anzahl von Umdrehungen, eines Drehmoments des Elektromotors und so weiter, ziehen. Auf diese Weise kann die wenigstens eine Steuereinheit Informationen darüber erhalten, welche Tätigkeit beziehungsweise in welcher Häufigkeit oder Form eine bestimmte Tätigkeit durch das Elektrogerät durchgeführt wurde. Entsprechende Informationen zum Abgleich können in den Projektdaten hinterlegt sein.

Auf diese Weise kann die wenigstens eine Steuereinheit jedenfalls zum Teil den Projektstatus abschätzen, ohne auf eine Benutzereingabe angewiesen zu sein.

Gemäß zumindest einer Ausführungsform erhält die wenigstens eine Steuereinheit die Projektdaten, insbesondere über die Kommunikationsschnittstelle, von der externen Recheneinheit, insbesondere über das Mobilfunknetz oder das LPWAN, und speichert diese auf dem Datenspeicher.

Mit anderen Worten kann ein Projektplan in Form der Projektdaten für die Sequenz von Projektschritten auf diese Weise über den Cloudserver, einen Webbrowser und einen entsprechenden Webserver, ein mobiles elektronisches Endgerät oder dergleichen in drahtloser Weise dem Elektrogerät zur Verfügung gestellt werden.

Beispielsweise können auf dem Elektrogerät beziehungsweise dem Datenspeicher auch verschiedene Sequenzen von Projektschritten gespeichert sein und je nachdem, welches Projekt aktuell ausgeführt werden soll, können die entsprechenden Projektdaten genutzt werden. Die Auswahl des Projekts kann beispielsweise ebenfalls durch eine Benutzereingabe, insbesondere einen Sprachbefehl, erfolgen.

Gemäß einem weiteren Aspekt der Erfindung wird ein Elektrogerät angegeben. Das Elektrogerät ist dazu eingerichtet, ein erfindungsgemäßes Verfahren durchzuführen oder es führt ein solches durch.

Insbesondere weist das Elektrogerät wenigstens eine Steuereinheit auf, die dazu eingerichtet ist, einen aktuellen Projektschritt einer Vielzahl vorgegebener Projektschritte zu bestimmen und basierend auf gespeicherten Projektdaten, welche der Vielzahl vorgegebener Projektschritte jeweils einen Wert für den Geräteparameter zuordnen, den dem aktuellen Projektschritt zugeordneten Wert für den Geräteparameter zu bestimmen und automatisch einzustellen.

Das Elektrogerät ist insbesondere als Elektrowerkzeug ausgebildet, beispielsweise als Akkuschrauber, Bohrmaschine, Bohrhammer, Kappsäge, Tauchsäge, Kreissäge, Stichsäge und so weiter. In anderen Ausführungsformen ist das Elektrogerät als Beleuchtungsvorrichtung oder als Gartengerät ausgebildet.

Gemäß zumindest einer Ausführungsform des Elektrogeräts weist das Elektrogerät eine Kommunikationsschnittstelle zur drahtlosen Kommunikation auf. Die wenigstens eine Steuereinheit ist mit der Kommunikationsschnittstelle verbunden.

Gemäß zumindest einer Ausführungsform ist die wenigstens eine Steuereinheit dazu eingerichtet, den dem aktuellen Projektschritt zugeordneten Wert für den Geräteparameter von einer externen Recheneinheit, welche die Projektdaten speichert, zu erhalten, insbesondere mittels drahtloser Kommunikation über die Kommunikationsschnittstelle.

Gemäß zumindest einer Ausführungsform ist die wenigstens eine Steuereinheit dazu eingerichtet, eine Statusinformation mittels drahtloser Kommunikation, insbesondere über die Kommunikationsschnittstelle, von der externen Recheneinheit zu erhalten und den aktuellen Projektschritt zumindest teilweise abhängig von der Statusinformation zu bestimmen.

Gemäß zumindest einer Ausführungsform weist das Elektrogerät einen elektrischen oder elektronischen Verbraucher auf, beispielsweise einen Elektromotor.

Gemäß zumindest einer Ausführungsform weist das Elektrogerät ein Akkupack zur Energieversorgung des Verbrauchers auf und das Akkupack enthält die Kommunikationsschnittstelle.

Gemäß zumindest einer Ausführungsform weist das Akkupack eine erste Steuereinheit der wenigstens einen Steuereinheit auf und das Elektrogerät weist eine extern zu dem Akkupack angeordnete zweite Steuereinheit der wenigstens einen Steuereinheit auf. Die erste Steuereinheit ist dazu eingerichtet, den aktuellen Projektschritt zu bestimmen, den dem aktuellen Projektschritt zugeordneten Wert für den Geräteparameter zu bestimmen und einen Steuerbefehl abhängig von dem den aktuellen Projektschritt zugeordneten Wert für den Geräteparameter zu erzeugen und an die zweite Steuereinheit zu übermitteln. Die zweite Steuereinheit ist dazu eingerichtet, den dem aktuellen Projektschritt zugeordneten Wert für den Geräteparameter abhängig von dem Steuerbefehl automatisch einzustellen.

Unter einer Recheneinheit kann insbesondere ein Datenverarbeitungsgerät verstanden werden, die einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen. Die wenigstens eine Steuereinheit kann wenigstens eine Recheneinheit sein oder enthalten.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer Festwertspeicher, EPROM (englisch: "erasable read-only memory"), als elektrisch löschbarer Festwertspeicher, EEPROM (englisch: "electrically erasable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen
- Fig. 1: eine schematische Darstellung einer beispielhaften Ausführungsform eines erfindungsgemäßen Elektrogeräts; und
- Fig. 2: eine schematische Blockdarstellung eines Akkupacks einer weiteren beispielhaften Ausführungsform eines erfindungsgemäßen Elektrogeräts.

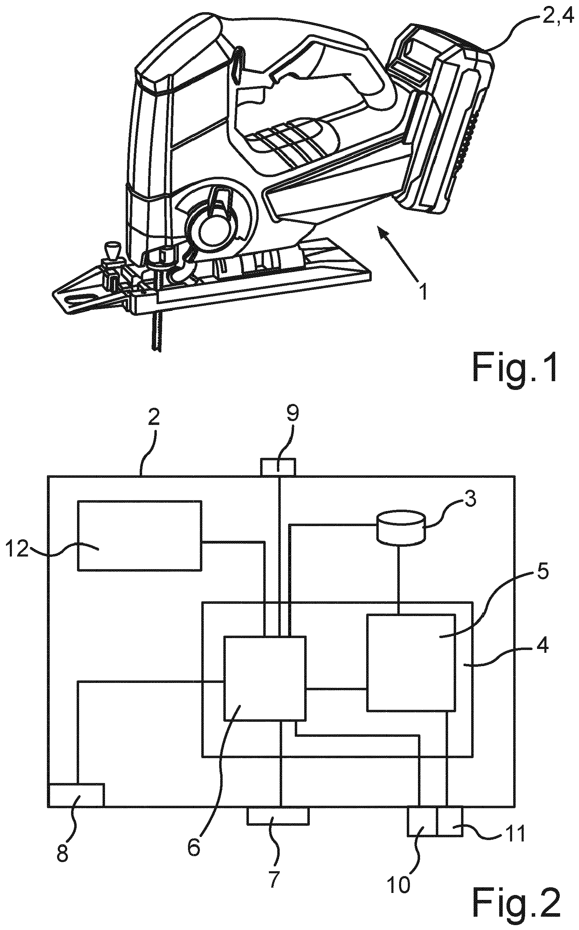

Fig. 1 zeigt schematisch eine beispielhafte Ausführungsform eines erfindungsgemäßen Elektrogeräts 1, das vorliegend ohne Beschränkung der Allgemeinheit als Elektrowerkzeug, insbesondere als Stichsäge ausgestaltet ist. Das Elektrogerät 1 ist dazu eingerichtet, ein erfindungsgemäßes Verfahren zur automatischen Einstellung eines Geräteparameters des Elektrogeräts 1 durchzuführen.

Insbesondere weist das Elektrogerät 1 wenigstens eine Steuereinheit 4 auf, die dazu eingerichtet ist, einen aktuellen Projektschritt einer Vielzahl vorgegebener Projektschritte zu bestimmen und basierend auf gespeicherten Projektdaten, welche der Vielzahl vorgegebener Projektschritte jeweils einen Wert für den Geräteparameter zuordnen, den dem aktuellen Projektschritt zugeordneten Wert für den Geräteparameter zu bestimmen und automatisch einzustellen.

Die wenigstens eine Steuereinheit 4 kann Teil eines Akkupacks 2 zur Energieversorgung des Elektrogeräts 1 sein, wie in Fig. 1 angedeutet, oder extern zu dem Akkupack 2 im Gehäuse des Elektrogeräts 1 angeordnet sein. In anderen Ausführungsformen ist wenigstens eine Steuereinheit 4 teilweise im Akkupack 2 und teilweise extern zu dem Akkupack 2 angeordnet.

Der Geräteparameter kann beispielsweise einer elektrischen Leistungsabgabe von dem Akkupack an einen Elektromotor des Elektrogeräts 1, einem Betriebsstrom, einer Betriebsspannung, einer Motordrehrichtung, einer Motordrehzahl, einem Parameter eines Motordrehzahlprofils, einem Motordrehmoment oder einem Parameter eines Motordrehmomentprofils entsprechen.

Fig. 2 zeigt eine schematische Blockdarstellung eines Akkupacks 2 einer weiteren beispielhaften Ausführungsform eines erfindungsgemäßen Elektrogeräts 1, beispielsweise des Elektrogeräts 1 aus Fig. 1. Ohne Beschränkung der Allgemeinheit ist die wenigstens eine Steuereinheit 4 als genau eine Steuereinheit 4 des Akkupacks 2 dargestellt.

Das Akkupack 2 enthält wenigstens eine Akkumulatorzelle 12 und die Steuereinheit 4 kann einen Batteriemanagementschaltkreis 6 aufweisen. Der Batteriemanagementschaltkreis 6 ist mit den Akkumulatorzellen 12 und einer elektrischen Schnittstelle 7 des Akkupacks 2 verbunden. Über die elektrische Schnittstelle 7 kann das Akkupack 2 mit dem Elektrogerät 1 verbunden werden, um diesem in den Akkumulatorzellen 12 gespeicherte elektrische Energie zum Betrieb des Elektrogeräts 1 bereitzustellen. Der Batteriemanagementschaltkreis 6 kann dabei die Strom- und/oder Spannungsabgabe regeln oder steuern.

Außerdem weist das Akkupack 2 einen Datenspeicher 3 auf, welcher Projektdaten betreffend eine vordefinierte Sequenz von Projektschritten speichert. Insbesondere enthalten die Projektdaten Informationen, welche einer Vielzahl von Projektschritten der Sequenz, beispielsweise allen Projektschritten der Sequenz, jeweils einen Wert für den Geräteparameter zuordnen. Die Projektdaten kann die Steuereinheit 4, beispielsweise der Batteriemanagementschaltkreis 6, über eine Kommunikationsschnittstelle 8 des Akkupacks 2 zur drahtlosen Kommunikation von einer externen Recheneinheit (nicht gezeigt) erhalten und auf dem Datenspeicher 3 speichern.

Um der Steuereinheit 4 die Information bereitzustellen, welches der aktuelle Projektschritt ist, kann beispielsweise ein Benutzer mit dem Akkupack 2 oder einem sonstigen Teil des Elektrogeräts 1 über ein entsprechendes Eingabegerät interagieren und so eine Rückmeldung geben, welcher der aktuelle Projektschritt ist. Beispielsweise kann das Eingabegerät ein Mikrofon 10 umfassen, sodass der Benutzer die Benutzereingabe durch einen entsprechenden Sprachbefehl tätigen kann. Die Steuereinheit 4 kann einen Sprachprozessor 5 enthalten, um den Sprachbefehl entsprechend zu verarbeiten.

Alternativ oder zusätzlich kann das Eingabegerät einen mechanischen Taster 9 aufweisen, den der Benutzer betätigen kann, um den aktuellen Projektschritt zu bestimmen. Alternativ oder zusätzlich zu dem Taster 9 kann auch ein sonstiger mechanischer Schalter oder eine berührungsempfindliche Fläche oder dergleichen vorgesehen werden.

Eine alternative Möglichkeit zur Bestimmung des aktuellen Projektschritts besteht darin, dass der Benutzer die Benutzereingabe über ein externes elektronisches Gerät (nicht gezeigt), beispielsweise ein Smartphone, tätigt und das externe elektronische Gerät ein entsprechendes Signal drahtlos über die Kommunikationsschnittstelle 8 der Steuereinheit 4 zur Verfügung stellt.

Die Steuereinheit 4 kann den Datenspeicher 3 lesen, um den dem aktuellen Projektschritt zugeordneten Wert für den Geräteparameter zu bestimmen und automatisch einstellen.

In manchen Ausführungsformen weist das Akkupack 2, insbesondere die Steuereinheit 4, einen Sprachsyntheseschaltkreis (nicht gezeigt) auf, der dazu eingerichtet ist, für einen vorgegebenen Projektschritt der Sequenz einen zugehörigen Benutzertext aus dem Datenspeicher 3 auszulesen und basierend auf dem Benutzertext ein entsprechendes Audiosignal mittels eines bekannten Sprachsyntheseverfahrens zu erzeugen und einem Lautsprecher 11 des Akkupacks 1 bereitzustellen. Der Lautsprecher 11 erhält das Audiosignal und kann dann basierend auf dem Audiosignal eine Sprachausgabe an einen Benutzer des Elektrogeräts erzeugen, um diesen bei der Durchführung des Projekts zu unterstützen, insbesondere um dem Benutzer Informationen betreffend den vorgegebenen Projektschritt zur Verfügung zu stellen. Auf diese Weise kann der Benutzer durch entsprechende Sprachausgaben Schritt für Schritt durch die einzelnen Projektschritte geleitet werden.

Die Erfindung ermöglicht also wie beschrieben eine automatisierte Einstellung eines Geräteparameters eines Elektrogeräts abhängig vom Projektstatus.

Beispielsweise können somit Maschinenparameter des Elektrogeräts automatisch entlang des Projektfortschritts eingestellt werden, wobei für verschiedene Projektaufgaben unterschiedliche Maschinenparameter automatisch realisiert werden können.

Ist es im aktuellen Projektschritt beispielsweise erforderlich, bestimmte Schrauben mittels eines Schraubers einzuschrauben, so können passend zum Projektschritt im Schrauber beispielsweise das Drehmoment und/oder die Drehzahl ideal eingestellt werden. Durch die automatische Einstellung der entsprechenden Maschinenparameter kann der Benutzer aktiv in seinem Arbeiten unterstützt werden. Durch Messung der Drehzahl und/oder der Umdrehungsanzahl, beispielsweise mittels einer entsprechend ausgestalteten Sensorik im Akkupack, kann optional auch eine Einschraubtiefe abgeschätzt werden und die Drehzahl zum Ende des Einschraubvorgangs reduziert oder der Schrauber sogar abgeschaltet werden.

In manchen Ausführungsformen wird ein Elektrogerät mit Akkupack bereitgestellt, wobei das Akkupack über IoT mi einer Cloud verbunden ist. Das Akkupack kann etwa die Leistungsabgabe entsprechend einem Projektfortschritt oder einer aktuellen Aufgabe einstellen und/oder die Einstellungen werden durch eine Kommunikationsschnittstelle zwischen Akkupack und dem übrigen Gerät realisiert, zum Beispiel via I2C oder UART.

### BEZUGSZEICHENLISTE:

- 1: Elektrogerät
- 2: Akkupack
- 3: Datenspeicher
- 4: Steuereinheit
- 5: Sprachprozessor
- 6: Batteriemanagementschaltkreis
- 7: elektrische Schnittstelle
- 8: Kommunikationsschnittstelle
- 9: Taster
- 10: Mikrofon
- 11: Lautsprecher
- 12: Akkumulatorzellen

## Patentansprüche

1. Verfahren zur automatischen Einstellung eines Geräteparameters eines Elektrogeräts (1) abhängig von gespeicherten Projektdaten, welche einer Vielzahl vorgegebener Projektschritte jeweils einen Wert für den Geräteparameter zuordnen, wobei mittels wenigstens einer Steuereinheit (4) des Elektrogeräts (1)
- ein aktueller Projektschritt der Vielzahl Projektschritte bestimmt wird;
- der dem aktuellen Projektschritt zugeordnete Wert für den Geräteparameter basierend auf den Projektdaten bestimmt wird und automatisch eingestellt wird.

2. Verfahren nach Anspruch 1, wobei der Geräteparameter einem elektrischen oder elektronischen Betriebsparameter zum Betrieb eines Verbrauchers des Elektrogeräts (1) entspricht, beispielsweise einer elektrischen Leistungsabgabe von einer Energiequelle an den Verbraucher, einem Betriebsstrom, einer Betriebsspannung, einer Motordrehrichtung, einer Motordrehzahl, einem Parameter eines Motordrehzahlprofils, einem Motordrehmoment oder einem Parameter eines Motordrehmomentprofils.

3. Verfahren nach Anspruch 1, wobei der Geräteparameter einer räumlichen Ausrichtung oder Position einer Komponente des Elektrogeräts (1) entspricht.

4. Verfahren nach Anspruch 3, wobei einer oder mehrere Aktuatoren des Elektrogeräts (1) mittels der wenigstens einen Steuereinheit (4) angesteuert wird, um die Ausrichtung oder Position der Komponente gemäß dem Geräteparameter einzustellen.

5. Verfahren nach einem der Ansprüche 1, 3 oder 4, wobei der Geräteparameter einer Position eines Anschlags des Elektrogeräts (1) oder einem Winkel eines Sägeblatts des Elektrogeräts (1) entspricht.

6. Verfahren nach einem der vorhergehenden Ansprüche, wobei mittels der wenigstens einen Steuereinheit (4) ein Datenspeicher (3) des Elektrogeräts (1), welcher die Projektdaten speichert, gelesen wird, um den dem aktuellen Projektschritt zugeordneten Wert für den Geräteparameter zu bestimmen.

7. Verfahren nach Anspruch 6, wobei die Projektdaten von einer externen Recheneinheit erhalten werden und auf dem Datenspeicher (3) gespeichert werden.

8. Verfahren nach einem der Ansprüche 1 bis 5, wobei der dem aktuellen Projektschritt zugeordnete Wert für den Geräteparameter von der wenigstens einen Steuereinheit (4) mittels drahtloser Kommunikation von einer externen Recheneinheit, welche die Projektdaten speichert, erhalten wird.

9. Verfahren nach einem der vorhergehenden Ansprüche, wobei eine Benutzereingabe erfasst wird und der aktuelle Projektschritt mittels der wenigstens einen Steuereinheit (4) zumindest teilweise abhängig von der Benutzereingabe bestimmt wird.

10. Verfahren nach Anspruch 9, wobei zum Erfassen der Benutzereingabe eine Benutzerinteraktion mit einem Eingabegerät (9, 10) des Elektrogeräts (1) detektiert wird.

11. Verfahren nach einem der vorhergehenden Ansprüche, wobei mittels der wenigstens einen Steuereinheit (4) ein Betriebsstrom zum Betrieb eines elektrischen oder elektronischen Verbrauchers des Elektrogeräts (1) und/oder eine Betriebsspannung zum Betrieb des Verbrauchers und/oder eine Leistungsabgabe einer Energiequelle an den Verbraucher überwacht wird und der aktuelle Projektschritt zumindest teilweise abhängig von einem Ergebnis der Überwachung bestimmt wird.

12. Verfahren nach einem der vorhergehenden Ansprüche, wobei von der wenigstens einen Steuereinheit (4) eine Statusinformation mittels drahtloser Kommunikation erhalten wird und der aktuelle Projektschritt zumindest teilweise abhängig von der Statusinformation bestimmt wird.

13. Elektrogerät (1) mit wenigstens einer Steuereinheit (4), die dazu eingerichtet ist,
- einen aktuellen Projektschritt einer Vielzahl vorgegebener Projektschritte zu bestimmen; und
- basierend auf gespeicherten Projektdaten, welche der Vielzahl vorgegebener Projektschritte jeweils einen Wert für den Geräteparameter zuordnen, den dem aktuellen Projektschritt zugeordneten Wert für den Geräteparameter zu bestimmen und automatisch einzustellen.

14. Elektrogerät (1) nach Anspruch 13, wobei
- das Elektrogerät (1) einen Datenspeicher (3) aufweist, welcher die Projektdaten speichert; und
- die wenigstens eine Steuereinheit (4) dazu eingerichtet ist, den Datenspeicher (3) zu lesen, um den dem aktuellen Projektschritt zugeordneten Wert für den Geräteparameter zu bestimmen.

15. Elektrogerät (1) nach einem der Ansprüche 13 oder 14, wobei
- das Elektrogerät (1) eine Kommunikationsschnittstelle (8) zur drahtlosen Kommunikation aufweist; und
- die wenigstens eine Steuereinheit (4) mit der Kommunikationsschnittstelle (8) verbunden und dazu eingerichtet ist, über die Kommunikationsschnittstelle (8)
a) den dem aktuellen Projektschritt zugeordneten Wert für den Geräteparameter von einer externen Recheneinheit, welche die Projektdaten speichert, zu erhalten; und/oder
b) eine Statusinformation mittels drahtloser Kommunikation zu erhalten und den aktuellen Projektschritt zumindest teilweise abhängig von der Statusinformation zu bestimmen.

16. Elektrogerät (1) nach Anspruch 15, wobei das Elektrogerät (1) einen elektrischen oder elektronischen Verbraucher aufweist sowie ein Akkupack (2) zur Energieversorgung des Verbrauchers und das Akkupack (2) die Kommunikationsschnittstelle (8) aufweist.

17. Elektrogerät (1) nach Anspruch 16, wobei
- das Akkupack (2) eine erste Steuereinheit (4) der wenigstens einen Steuereinheit (4) aufweist und das Elektrogerät (1) eine extern zu dem Akkupack (2) angeordnete zweite Steuereinheit (4) der wenigstens einen Steuereinheit (4) aufweist;
- die erste Steuereinheit (4) dazu eingerichtet ist, den aktuellen Projektschritt zu bestimmen, den dem aktuellen Projektschritt zugeordneten Wert für den Geräteparameter zu bestimmen und einen Steuerbefehl abhängig von dem dem aktuellen Projektschritt zugeordneten Wert für den Geräteparameter zu erzeugen und an die zweite Steuereinheit zu übermitteln; und
- die zweite Steuereinheit dazu eingerichtet ist, den dem aktuellen Projektschritt zugeordneten Wert für den Geräteparameter abhängig von dem Steuerbefehl automatisch einzustellen.
